# EUROPÄISCHE PATENTSCHRIFT

(11) **EP 0 767 009 B1**
(45) Veröffentlichungstag und Bekanntmachung des Hinweises auf die Patenterteilung: **10.07.2002**
(21) Anmeldenummer: 96114997.8
(22) Anmeldetag: 19.09.1996
(51) Int. Cl.: B05D 1/04, B05D 7/02

(54) **Verfahren zur elektrostatischen Lackierung von nicht leitfähigen Oberflächen**
Process for electrostatically coating non-conductive surfaces
Procédé pour revêtir électrostatiquement des surfaces non conductrices

(30) Priorität: 02.10.1995 DE 19536844
(43) Veröffentlichungstag der Anmeldung: 09.04.1997
(73) Patentinhaber: BAYER AG, 51368 Leverkusen (DE)
(72) Erfinder: Jonas, Friedrich, Dr., 52066 Aachen (DE); Guntermann, Udo, 47798 Krefeld (DE); Lerch, Klaus, Dr., 47800 Krefeld (DE); Böhnke, Arthur, 47800 Krefeld (DE); Basten, Hans, 47839 Krefeld (DE); Thometzek, Peter, Dr., 47800 Krefeld (DE)

(56) Entgegenhaltungen:
- EP-A- 0 339 340
- EP-A- 0 443 767
- EP-A- 0 576 031
- PATENT ABSTRACTS OF JAPAN vol. 014, no. 330 (C-0741), 16.Juli 1990 & JP-A-02 120373 (KANSAI PAINT CO LTD), 8.Mai 1990,

## Beschreibung

In den letzten Jahrzehnten haben aus Umweltschutzgründen elektrostatische lösungsmittelarme bzw. -freie Lackierungsverfahren immer mehr an Bedeutung gewonnen. Ein lösungsmittelfreies Lackierungsverfahren ist z.B. die Pulverlackierung. Hierbei werden thermoplastische oder vernetzende Polymerpulver auf die zu lackierenden Oberflächen gebracht und anschließend durch Erhitzen unter Bildung des Lackfilms zusammengesintert bzw. geschmolzen.

Das Aufbringen der Polymerpulver bzw. Lacke erfolgt bei leitfähigen Materialien wie Metallen bevorzugt durch elektrostatische Lackierung. Die für die elektrostatische Lackierung erforderliche Aufladung der Pulverlackteilchen kann durch direkten Kontakt der Teilchen mit unter Hochspannung stehenden Elektroden erfolgen. Eine weitere Möglichkeit ist das Aufbringen von Ladungen durch Reibung unter Ausnutzung des triboelektrischen Verhaltens.

Für die elektrostatische Lackierung muß die Oberfläche des zu lackierenden Körpers leitfähig sein. Da Kunststoffe üblicherweise Isolatoren sind, müssen diese, bevor man sie elektrostatisch lackieren kann, elektrisch leitfähig ausgerüstet werden. Hierzu können den Kunststoffen leitfähige Füllstoffe, z.B. Ruße oder Metalloxide, zugesetzt werden. Nachteilig ist dabei, daß die Formteile dann im Falle der Ruße schwarz sind bzw. bei Metalloxiden sehr hohe Füllgrade erforderlich sind, die zu schlechten mechanischen Eigenschaften führen.

Eine andere Möglichkeit die Kunststoffoberflächen leitfähig auszurüsten, besteht in der Beschichtung mit leitfähigen Lacken. Bei Verwendung rußgefüllter Leitfähigkeitslacke sind die Oberflächen wieder schwarz eingefärbt, so daß transparente bzw. helle Beschichtungen schwierig herstellbar sind.

Es wurde nun gefunden, daß sich organische elektrisch leitfähige Polymere sehr gut als leitfähige Beschichtung für Kunststoffe, die elektrostatisch lackiert werden sollen, eignen.

Gegenstand der Erfindung ist daher ein Verfahren zur elektrostatischen Lackierung von nicht leitfähigen Oberflächen, dadurch gekennzeichnet, daß man die nicht leitfähigen Oberflächen vor der Lackierung mit einem elektrisch leitfähigen organischen Polymeren gemäß dem Hauptanspruch beschichtet.

Geeignete organische Polymere sind 3,4-Polyethylendioxythiophen und Polystyrosulfonat. Die leitfähige Schicht kann auf der nicht leitfähigen Oberfläche nach unterschiedlichen Verfahren erzeugt werden. Geeignete Verfahren sind z.B.:
1. Die Herstellung leitfähiger Polymere in situ auf der nicht leitfähigen Oberfläche, wie sie am Beispiel der Polymerisation von 3,4-Ethylendioxythiophen in der EP-A 339 340 beschrieben ist.
2. Die Beschichtung der nicht leitfähigen Oberflächen mit Lacken, die die leitfähigen Polymeren in fein dispergierter bzw. kolloidaler oder gelöster Form enthalten. Beispiele geeigneter Beschichtungslösungen sind Polyanilindispersionen in Lösungsmitteln wie Toluol, Xylol oder Methylisobutylkeron (z.B. Incoblend-Lack® bzw. Versicon®) oder mit Polypyrrol beladene Lactices, wie sie in der EP-A 589 529 beschrieben sind. Bevorzugt sind Polythiophenderivate, wie sie in der EP-A 440 957 und DE-OS 4 211 459 beschrieben sind.

Besonders bevorzugt sind die in diesen Patentanmeldungen aufgeführten wäßrigen Polythiophendispersionen bzw. Lösungen, die sich von 3,4-Ethylendioxythiophen als Monomer ableiten und von polymeren Carbonsäuren oder polymeren Sulfonsäuren abgeleitete Polyanionen enthalten. Mit diesen Lösungen können fast farblose transparente leitfähige Schichten hergestellt werden, die die Nachteile von schwarz gefärbten, rußgefüllten Schichten nicht aufweisen.

Kunststoffe, die nach dem erfindungsgemäßen Verfahren lackiert werden können, sind z.B. Polyamide, Polysulfone, Polycarbonate, Polyimide, Polyester, ABS, Polystyrol, Polyacrylate, Polyvinylchlorid und deren Blends und Copolymere, weiterhin Duromere z.B. aus Phenolharzen, Epoxidharzen, Epoxidiisocyanuratharzen.

Die Kunststoffe können weiterhin übliche Füllstoffe wie anorganische Mineralien z.B. Kaolin oder Glasfasern enthalten. Weiterhin sind nach dem erfindungsgemäßen Verfahren nicht leitfähige Oberflächen aus Holz, z.B. Preßspanplatten, Glas, Keramik aus z.B. Aluminiumoxid, Siliciumnitrid, Porzellan lackierbar.

Die elektrisch leitfähigen Polymerdispersionen bzw. Lösungen können allein oder in Kombination mit Bindemitteln verwendet werden. Geeignete Bindemittel sind z.B. Polyurethane, Polyvinylacetat, Polyacrylate, ungesättigte Polyesterharze bzw. deren Mischungen.

Die Bindemittel werden bevorzugt als wäßrige Dispersion oder Emulsion oder Lösung eingesetzt.

Die leitfähige Beschichtung wird in einer Menge aufgebracht, die zu Oberflächenwiderständen < 10¹⁰ Ω/□, führt und eine gute elektrostatische Lackierung ermöglicht.

Hierzu sind im allgemeinen Schichtdicken von 0,05 bis 50 µm, bevorzugt 0,1 bis 5 µm erforderlich.

Das Aufbringen erfolgt nach bekannten Technologien z.B. durch Aufsprühen, Tauchen, Aufpinseln, Aufdrucken.

Nach dem Aufbringen werden die Beschichtungen getrocknet. Die Trocknung erfolgt bei Raumtemperatur oder bei höheren Temperaturen bis zu 250°C, bevorzugt bis zu 200°C.

Den wäßrigen Dispersionen aus leitfähigem Polymer und gegebenenfalls Bindemittel können Hilfslösemittel wie niedere Alkohole z.B. Methanol, Ethanol, Isopropanol oder Ketone z.B. Aceton oder offenkettige oder cyclische Amide z.B. N-Methylpyrrolidon zugesetzt werden.

Weitere Additive sind z.B. Tenside wie Salze langkettiger aliphatischer oder araliphatischer Sulfonsäuren.

Zur Verbesserung der Haftung können außerdem Haftvermittler wie organische Silane, z.B. 3-Glycidoxypropyltrimethoxysilan zugesetzt werden.

Die beschichteten Oberflächen werden dann in an sich bekannter Weise elektrostatisch lackiert.

Bevorzugt werden die Kunststoffe pulverlackiert. Geeignete Pulverlacksysteme sind z.B. Epoxidharzpulverlacke, Polyacrylatpulverlacke, hydroxylfunktionelle Polyester, die mit Carbonsäureanhydriden, Carbonsäuren oder Polyisocyanaten vernetzt werden, carboxylfunktionelle Polyester, die mit polyfunktionellen Epoxiden z.B. Trisglycidylisocyanurat vernetzt werden.

Nach dem Aufbringen der Pulverlackschicht wird diese bei erhöhter Temperatur zusammengesintert bzw. geschmolzen. Die Temperatur liegt bei 50°C bis 300°C, bevorzugt 100°C bis 250°C.

Ein großer Vorteil des erfindungsgemäßen Verfahrens ist, daß Kombinationen aus Metallen und Kunststoffen jetzt gemeinsam in einem Arbeitsschritt durch elektrostatische Lackierung lackiert werden können, während die nicht leitfähigen Kunststoffteile nach anderen Verfahren bisher getrennt zuerst lackiert werden mußten und erst anschließend mit den elektrostatisch lackierten Metallteilen zusammengebaut werden konnten.

### Beispiele

### Beispiel 1

Eine Kunststoffrundplatte aus glasfasergefülltem Polyamid 6,6 (30 Gew.-% Glas) (6 cm Ø, 3 mm Dicke) wurde auf einer Lackschleuder bei 500 U/min mit folgender Lösung beschichtet:

| | |
|---|---|
| 10,0 g | 3,4-Polyethylendioxythiophen/Polystyrolsulfonat-Lösung, 1,3%ig in Wasser (AI 4071®, Bayer AG) |
| 0,6 g | N-Methylpyrrolidon |
| 0,2 g | 3-Glycidoxypropyltrimethoxysilan |
| 12,5 g | Isopropanol |
| 2,5 g | Wasser |

Nach der Beschichtung wurde die Schicht mit warmer Luft bei 50°C getrocknet.

Die so beschichtete Platte hatte einen Oberflächenwiderstand von 3 KΩ/□. Die Schichtdicke betrug ca. 1,0 µm. Die Platte wurde elektrostatisch mit einem Pulverlack auf Basis von Trisglycidylisocyanurat (Araldit® TT 810, Ciba-Geigy AG) und carboxylgruppenhaltigen Polyestern (Uralac® 4200, DSM N.V), der bezogen auf Bindemittel 50 % Titandioxid enthält, besprüht. Das Lackpulver bedeckte die erfindungsgemäße Beschichtung gleichmäßig und vollständig. Der Pulverlack wurde dann in einem Umluftofen 10 Minuten bei 180°C eingebrannt.

Nach dem Erkalten erhielt man eine hochglänzende Lackschicht, die auf dem Kunststoff gut haftete (Gitterschnitt 0).

Gleich gute Ergebnisse wurden auf glasfasergefülltem Polyamid 6 (30 Gew.-% Glas), Polysulfon (UDEL® 1700, Hersteller Amoco Inc.), Glas und Aluminiumoxidkeramik erhalten.

### Vergleichsversuch

Eine Glasplatte und eine Polycarbonatplatte ohne erfindungsgemäße Beschichtung wurden mit Pulverlack elektrostatisch besprüht. Das Lackpulver bedeckte die Platte nur an wenigen Stellen.

### Beispiel 2

Kunststoff und Glasplatten wurden wie in Beispiel 1 mit folgenden Rezepturen auf einer Lackschleuder bei 800 U/min beschichtet:

### Rezeptur a)

| | |
|---|---|
| 4,20 g | 3,4-Polyethylendioxythiophen/Polystyrolsulfonat-Lösung, 1,3%ig in Wasser (AI 4071, Bayer AG) |
| 0,5 g | N-Methylpyrrolidon |
| 1,8 g | Polyacrylatdispersion (Mowlith® DM 771, Hoechst AG), Feststoffgehalt 50 % |
| 4,0 g | Isopropanol |
| 2,0 g | Wasser |

Die Schichtdicke nach dem Trocknen betrug 0,8 µm, der Oberflächenwiderstand der Schicht 2,5 x 10⁶ Ω/□.

### Rezeptur b)

| | |
|---|---|
| 8,3 g | 3,4-Polyethylendioxythiophen/Polystyrolsulfonat-Lösung, 1,3%ig in Wasser (AI 4071, Bayer AG) |
| 0,5 g | N-Methylpyrrolidon |
| 1,6 g | Polyvinylacetatdispersion (Mowlith® DC, Hoechst AG), Feststoffgehalt 56 % |
| 2,0 g | Isopropanol |

Die Schichtdicke nach dem Trocknen betrug 0,2 µm, der Oberflächenwiderstand der Schicht 4 x 10⁷ Ω/□.

### Rezeptur c)

| | |
|---|---|
| 6,0 g | 3,4-Polyethylendioxythiophen/Polystyrolsulfonat-Lösung, 1,3%ig in Wasser (AI 4071, Bayer AG) |
| 0,2 g | N-Methylpyrrolidon |
| 1,8 g | Polyurethandispersion (Bayhydrol® LS 2953, Bayer AG), Feststoffgehalt 40 % |
| 0,2 g | 3-Glycidoxypropyltrimethoxysilan |
| 0,6 g | Isopropanol |

Die Schichtdicke nach dem Trocknen betrug 0,8 µm, der Oberflächenwiderstand der Schicht 2 x 10⁷ Ω/□.

Die Platten wurden wie in Beispiel 1 mit Pulverlack besprüht und der Lack anschließend eingebrannt In allen Fällen wurden gleichmäßige, gut haftende, hochglänzende Lackschichten erhalten.

## Patentansprüche

1. Verfahren zur elektrostatischen Lackierung von nicht leitfähigen Oberflächen, bei dem man mit einer 3,4-Polyethylendioxythiophen und Polystyrolsulfonat enthaltenden Zubereitung auf die Oberfläche eine leitfähige Schicht aufbringt und diese in an sich bekannter Weise elektrostatisch lackiert.

## Claims

1. Process for electrostatic coating of non-conductive surfaces by using a preparation containing 3,4-polyethylenedioxythiophene and polystyrenesulphonate to apply a conductive layer to the surface and electrostatically coating this conductive layer in a conventional manner.

## Revendications

1. Procédé pour le revêtement électrostatique de surfaces non conductrices, selon lequel on applique sur la surface, à l'aide d'une composition contenant du 3,4-polyéthylène-dioxythiophène et du polystyrènesulfonate, une couche conductrice sur laquelle on applique ensuite un vernis, de manière connue, par revêtement électrostatique.
